# EUROPÄISCHE PATENTSCHRIFT

(11) **EP 0 845 391 B1**
(45) Veröffentlichungstag und Bekanntmachung des Hinweises auf die Patenterteilung: **24.08.2005**
(21) Anmeldenummer: 97120836.8
(22) Anmeldetag: 27.11.1997
(51) Int. Cl.: B60R 9/04

(54) **Dachrelingsystem für Kraftfahrzeuge**
Roof rails for vehicles.
Rails de toit pour véhicules.

(30) Priorität: 30.11.1996 DE 19649758
(43) Veröffentlichungstag der Anmeldung: 03.06.1998
(73) Patentinhaber: ORIS FAHRZEUGTEILE HANS RIEHLE GmbH, 71696 Möglingen (DE)
(72) Erfinder: Kleb, Emmerich, 71606 Markgröningen (DE); Riehle, Jörg, 70639 Stuttgart (DE)
(74) Vertreter: Hoeger, Stellrecht & Partner Patentanwälte

(56) Entgegenhaltungen:
- DE-A- 4 313 885
- DE-A- 4 323 098
- DE-C- 4 422 421
- US-A- 4 222 508
- US-E- R E32 583

## Beschreibung

Die Erfindung betrifft ein Dachrelingsystem für Kraftfahrzeuge, umfassend einen Relinglängsholm, welcher mittels Fußteilen an mindestens einer Relingaufnahme eines Kraftfahrzeugs befestigbar ist.

Es sind bereits eine Vielzahl von Dachrelingsystemen bekannt, diese sind jedoch mehr oder weniger aufwendig ausgebildet.

Ein gattungsbildendes Dachrelingsystem zeigt die DE 4422421C1.

Der Erfindung liegt die Aufgabe zugrunde, ein Dachrelingsystem zu schaffen, welches möglichst wenig Einzelteile benötigt und außerdem bei möglichst geringem Gewicht möglichst kostengünstig aufgebaut ist.

Diese Aufgabe wird bei einem Dachrelingsystem der Eingangs beschriebenen Art erfindungsgemäß durch die Merkmale des Anspruch 1 gelöst.

Der Vorteil der erfindungsgemäßen Lösung ist darin zu sehen, daß der Stützkörper gemäß den technisch Vorgaben ausgebildet sein kann und nicht notwendigerweise auch optischen Ansprüchen gerecht werden muß. Diese können alle mit der Verkleidung erfüllt werden, welche den Stützkörper umgibt und somit lediglich den optischen Erfordernissen des Dachrelingsystems gerecht werden muß, während der Stützkörper ausschließlich auf die technischen Erfordernisse zugeschnitten sein kann.

Diese Auftrennung zwischen Stützkörper und Verkleidung schafft ein Dachrelingsystem, welches besonders kostengünstig herstellbar ist, ohne daß die optische Qualität desselben leidet.

Ein Relinglängsholm kann in unterschiedlichster Art und Weise mit dem Stützkörper verbunden werden. Die erfindungsgemäße Lösung sieht vor, daß der Relinglängsholm mittels einer Schraubverbindung mit dem Stützkörper verbunden ist.

Um auch die Verbindung zwischen dem Stützkörper und der Relingaufnahme konstruktiv besonders einfach zu gestalten, ist vorgesehen, daß die Schraubverbindung den Stützkörper mit der Relingaufnahme verbindet.

Die Schraubverbindung ist dadurch realisiert, daß diese eine den Stützkörper durchsetzende Schraube aufweist.

Um die Schraubverbindung zwischen dem Relinglängsholm und dem Stützkörper möglichst unsichtbar zu gestalten, liegt die Schraube mit einem Schraubenkopf im Inneren des Relinglängsholms.

Der Relinglängsholm kann hierzu beispielsweise eine Senkbohrung für den Schraubenkopf aufweisen und massiv ausgebildet sein.

Da jedoch der Relinglängsholm im Rahmen der erfindungsgemäßen Lösung ebenfalls besonders gewichtsparend ausgebildet sein soll ist vorzugsweise vorgesehen, daß der Relinglängsholm als Rohr ausgebildet ist. In diesem Fall läßt sich in einfacher Weise der Schraubenkopf in dem Inneren des als Rohr ausgebildeten Relinglängsholms anordnen.

Hinsichtlich der Wirkung der Schraube auf den Relinglängsholm ist vorzugsweise vorgesehen, daß diese einen unteren Wandbereich des Relinglängsholms an dem Stützkörper anlegt und damit eine stabile Verbindung zum Stützkörper herstellt.

Besonders zweckmäßig ist es, wenn der Relinglängsholm eine Öffnung zum Einsetzen der den Relinglängsholm mit dem Stützkörper verbindenden Schraube aufweist.

Um die Optik zu wahren ist vorzugsweise vorgesehen, daß die Öffnung im Relinglängsholm mittels eines Verschlußteils, beispielsweise eines Verschlußteils aus Kunststoff verschließbar ist, so daß nach Einsetzen der Schraube diese von außen für einen Betrachter nicht mehr sichtbar ist.

Um mit derselben Schraube eine besonders einfache Verbindung zur Relingaufnahme zu schaffen, ist vorzugsweise vorgesehen, daß die Schraube in ein Verankerungsteil einschraubbar ist.

Dieses Verankerungsteil kann selbst prinzipiell Teil der Relingaufnahme sein und beispielsweise fest mit dieser verbunden sein.

Eine besonders günstige Lösung sieht jedoch vor, daß das Verankerungsteil in die Relingaufnahme am Kraftfahrzeug einsetzbar und in dieser vorzugsweise lösbar fixierbar ist. Damit kann ebenfalls das Verankerungsteil unabhängig von der Relingaufnahme hergestellt werden und somit über dieses Verankerungsteil in einfacher Weise eine Verankerung des gesamten Dachrelingsystems erfolgen.

Eine besonders einfache und aufgrund der Verwendung von Normteilen kostengünstige Lösung sieht vor, daß das Verankerungsteil ein in die Relingaufnahme einsetzbarer Nutenstein ist, wobei in diesem Fall die Relingaufnahme vorzugsweise einen C-förmigen Querschnitt mit einer sogenannten T-Nut zur Aufnahme des Nutensteins aufweist.

Im Zusammenhang mit der bisherigen Erläuterung der einzelnen Ausführungsbeispiele wurden keine näheren Angaben zur Ausbildung der Verkleidung selbst gemacht.

So wäre es beispielsweise ausreichend, wenn die Verkleidung lediglich die die Optik beeinträchtigenden Bereiche des Stützkörpers überdecken würde.

Besonders vorteilhaft ist es jedoch, wenn die Verkleidung sich zwischen dem Relinglängsholm und der jeweiligen Relingaufnahme erstreckt, so daß die Verkleidung dazu geschaffen werden kann, dem gesamten Fußteil ein gefälliges und an die übrigen Designelemente des Fahrzeugs angeordnetes Aussehen zu verleihen.

Im einfachsten Fall ist hierbei vorgesehen, daß die Verkleidung den Stützkörper hülsenähnlich oder topfähnlich umschließt, wobei sich vorzugsweise die Achse der Hülse ungefähr in Richtung der Schraube der Schraubverbindung erstreckt.

Hinsichtlich der Verbindung zwischen der Verkleidung und dem Stützkörper wurden bislang keine näheren Angaben gemacht. So wäre es prinzipiell ausreichend, die Verkleidung unabhängig vom Stützkörper, beispielsweise an der Relingaufnahme, zu verankern.

Eine besonders hinsichtlich der Montage günstige Lösung sieht jedoch vor, daß die Verkleidung relativ zum Stützkörper durch Formschluß exakt positionierbar ist, so daß der Stützkörper selbst die Position der Verkleidung festlegt und somit beide beispielsweise als Einheit an der gewünschten Stelle positionierbar sind, so daß hieraus eine besonders einfache Montage resultiert.

Eine besonders günstige Lösung, insbesondere im Hinblick auf die Montage des erfindungsgemäßen Dachrelingsystems sieht vor, daß die Verkleidung mit dem Stützkörper über Rastelemente verbindbar ist, welche es beispielsweise erlauben, den Stützkörper fest an der Verkleidung zu fixieren und beide miteinander als eine Einheit zu montieren.

Eine weitere vorteilhafte Lösung der Verkleidung sieht vor, daß diese sich mit Anlagelippen an den Relinglängsholm anschließt, um somit, insbesondere bei einem im Querschnitt ovalen oder runden Längsholm einen optisch schönen Anschluß zu erhalten.

Ferner ist zweckmäßigerweise vorgesehen, daß die Verkleidung eines endseitigen Fußteils eine Endkappe aufweist.

Diese Endkappe ist vorzugsweise dazu bestimmt, einerseits einen optischen Anschluß zwischen dem Relinglängsholm und dem Dach zu bilden und andererseits die Verletzungsgefahr in diesem Bereich zu reduzieren.

Die Endkappe kann in unterschiedlichster Art und Weise ausgebildet sein. Um eine sowohl optisch als auch hinsichtlich der Verletzungsgefahr günstige Verbindung zwischen der Endkappe und dem Relinglängsholm zu schaffen ist vorgesehen, daß die Endkappe den Relinglängsholm endseitig abschließt.

Vorzugsweise ist in diesem Bereich die Endkappe so geformt, daß sie eine mit dem Relinglängsholm bündige Fortsetzung desselben bildet.

Eine besonders günstige Lösung, insbesondere eines optisch schönen und verletzungssicheren Übergangs zwischen Dach und Relinglängsholm sieht vor, daß die Endkappe von dem jeweiligen Ende des Relinglängsholms in Richtung des Dachs des Kraftfahrzeugs bis zur Relingaufnahme verläuft.

Zur Sicherung der Endkappe ist vorzugsweise vorgesehen, daß diese in der jeweiligen Relingaufnahme mittels eines Formschlußelements verankerbar ist.

Die Verkleidung ist vorzugsweise aus Kunststoff hergestellt und insbesondere ein Spritzgußteil. Es ist aber auch möglich die Verkleidung aus anderen Materialien, beispielsweise Leichtmetall herzustellen.

Hinsichtlich der Ausbildung des Stützkörpers selbst wurden bislang keine näheren Angaben gemacht. So sieht ein vorteilhaftes Ausführungsbeispiel vor, daß der Stützkörper ein Mittelstück und von diesem abstehende Rippen aufweist.

Diese Lösung hat den großen Vorteil, daß mit diesen Rippen die Möglichkeit geschaffen ist, große Auflageflächen, beispielsweise für den Relinglängsholm und/oder die Relingaufnahme, zu schaffen, andererseits aber der Stützkörper selbst ein möglichst leichtes Bauteil bildet.

Darüber hinaus ist der Stützkörper vorteilhafterweise so ausgebildet, daß das Mittelstück zwei parallel zueinander verlaufende Stützstege und einen Zwischensteg aufweist, wobei der Zwischensteg und die Stützstege die Form eines umgekehrten U haben.

Prinzipiell kann der Stützkörper beliebig orientiert zu dem Relinglängsholm angeordnet sein. Eine besonders günstige Lösung sieht jedoch vor, daß die Rippen sich in Längsrichtung des Relinglängsholms erstrecken.

Darüber hinaus ist es ferner günstig, wenn sich die Querstege und der Zwischensteg des Mittelstücks in Längsrichtung des Relinglängsholms erstrecken.

Eine besonders kostengünstige Lösung sieht vor, daß der Stützkörper aus einem Abschnitt eines langgestreckten Profilstabes hergestellt ist. Vorzugsweise erfolgt eine ganz einfache Herstellung des Stützkörpers durch Ablängen des Profilstabes.

Im Zusammenhang mit der Beschreibung der einzelnen Merkmale des Stützkörpers wurde nicht darauf abgehoben, wie der Relinglängsholm relativ zum Stützkörper günstigerweise fixierbar ist.

Eine besonders zweckmäßig Lösung sieht vor, daß der Stützkörper eine den Relinglängsholm gegen Bewegungen quer zu einer Längsrichtung des Relinglängsholms sichernde Aufnahme aufweist, wobei diese Aufnahme beispielsweise durch einen Formschluß, hergestellt durch Bohrungen im Relinglängsholm und dem Stützkörper sowie die durch diese hindurchgesteckte Schraube, geschaffen sein kann.

Um ferner noch eine zusätzliche Querstabilität zwischen dem Stützkörper und der Relingaufnahme zu erhalten, ist vorzugsweise vorgesehen, daß der Stützkörper eine Aufnahme für das Verankerungsteil aufweist, so daß auch das in der Relingaufnahme sitzende Verankerungsteil vorzugsweise über die Relingaufnahme übersteht und in die Aufnahme des Stützkörpers eingreift.

Vorzugsweise ist hierzu die Aufnahme im Stützkörper für das Verankerungsteil so ausgebildet, daß sie mit einem aus der Relingaufnahme des Kraftfahrzeugs überstehenden Oberteil formschlüssig zusammenwirkt, um insbesondere quer zur Längsrichtung des Relinglängsholms wirkende Querkräfte von dem Stützkörper auf die Relingaufnahme direkt, insbesondere ohne Belastung der Stützkörper und Verankerungsteil verbindenden Schraube zu übertragen.

Der Stützkörper kann prinzipiell aus den verschiedensten Materialien, beispielsweise einem stabilen Kunststoff hergestellt sein. Eine besonders günstige Lösung sieht vor, daß der Stützkörper aus Leichtmetall hergestellt ist.

Hinsichtlich der Art der Relingaufnahme wurden bislang keine detaillierten Angaben gemacht. So könnte die Relingaufnahme mehrere jeweils für ein Fußteil vorgesehene Aufnahmen aufweisen.

Eine besonders günstig in das Kraftfahrzeug integrierbare Lösung sieht vor, daß die Relingaufnahme eine im Querschnitt C-förmige und mit einer T-Nut versehene Schiene ist. Eine derartige Schiene ist vorzugsweise ebenfalls als Profilschiene, insbesondere aus Leichtmetall, ausgebildet.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische Ansicht einer Dachreling montiert auf einem Kraftfahrzeug;
- Fig. 2: einen Querschnitt durch ein erfindungsgemäßes mittiges Fußteil;
- Fig. 3: einen Schnitt längs Linie 3-3 in Fig. 2;
- Fig. 4: einen Längsschnitt durch ein endseitiges Fußteil und
- Fig. 5: eine Ansicht des Fußteils in Richtung des Pfeils B in Fig. 4.

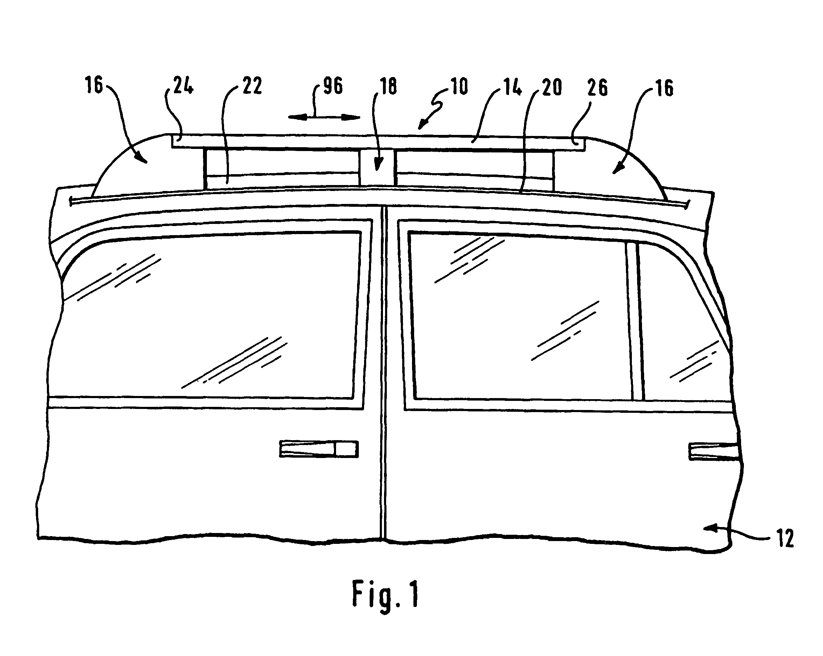

Ein Ausführungsbeispiel eines erfindungsgemäßen Dachrelingsystems 10 für ein als Ganzes mit 12 bezeichnetes Fahrzeug umfaßt, wie ebenfalls in Fig. 1 dargestellt, einen Relinglängsholm 14, welcher mittels Fußteilen 16 und 18 an einer als Ganzes mit 20 bezeichneten Relingaufnahme gehalten ist. Die Relingaufnahme 20 sitzt dabei im Bereich eines Dachs 22 des Kraftfahrzeugs 12.

Die Fußteile 16 bilden endseitige Fußteile, welche jeweils an den beiden Enden 24 und 26 des Relinglängsholms angeordnet sind, während das Fußteil 18 ein mittiges Fußteil darstellt.

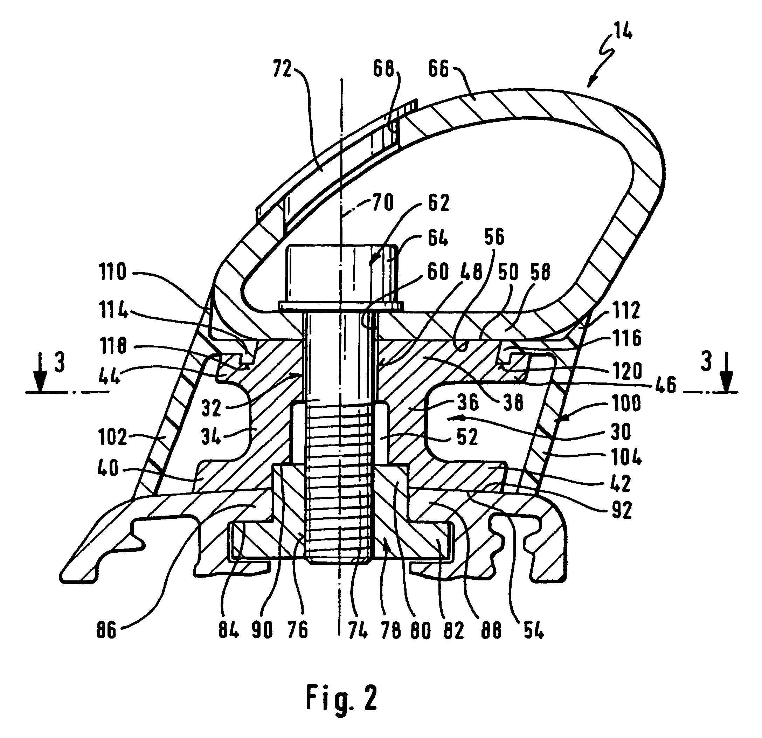

Jedes der Fußteile 16 oder 18 umfaßt, wie exemplarisch an dem Fußteil 18 in Fig. 2 dargestellt, einen Stützkörper 30, welcher einen Abschnitt eines Stangenmaterials, vorzugsweise eines in Längsrichtung profilierten Stangenmaterials, darstellt, wobei der Stützkörper 30 durch einfaches Ablängen des Stangenmaterials herstellbar ist.

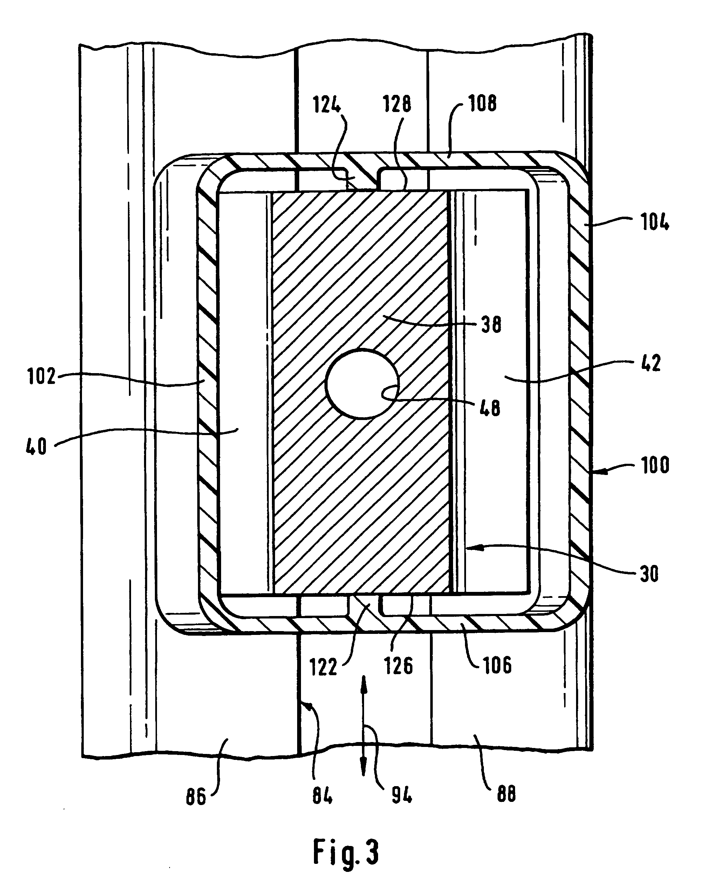

Jeder Stützkörper 30 umfaßt ein Mittelstück 32, welches zwei parallel zueinander verlaufende Stützstege 34 und 36 aufweist, sowie einen die beiden Stützstege 34 und 36 verbindenden Zwischensteg 38, wobei der von dem Zwischensteg 38 die beiden Stützstege 34 und 36 abstehen und dem Mittelstück 32 eine Querschnittsform eines umgekehrten U geben. An das Mittelstück 32 sind, wie in Fig. 2 und 3 dargestellt, untere Rippen 40 und 42 angeformt, wobei diese unteren Rippen sich ausgehend von unteren Enden der beiden Stützstege 34 und 36 erstrecken und ungefähr parallel zum Zwischensteg 38 verlaufen. Ferner sind an das Mittelstück 32 obere Rippen 44 und 46 einstückig angeformt, wobei sich die oberen Rippen 44 und 46 parallel zu den unteren Rippen 40 bzw. 42 erstrecken.

Der Zwischensteg 38 des Mittelstücks 32 ist ferner mit einer ungefähr parallel zu den Stützstegen 34 und 36 verlaufenden Bohrung 48 durchsetzt, welche von einer oberen Auflagefläche 50 des Mittelstücks 32 ausgehend bis zu einem zwischen den Stützstegen 34 und 36 liegenden Längskanal 52 reicht, wobei der Längskanal 52 auf einer dem Zwischensteg 38 gegenüberliegenden Seite sich zwischen den unteren Rippen 40 und 42 in Richtung einer unteren Auflagefläche 54 des Stützkörpers 30 zwischen den unteren Rippen 40 und 42 öffnet.

Zur Abstützung des Längsholms 14 ist dieser mit einer unteren Stützfläche 56 auf der oberen Auflagefläche 50 des Stützkörpers 30 auflegbar, wobei die untere Stützfläche 56 durch eine untere Wand 58 des rohrförmigen Relinglängsholms 14 gebildet ist. Die untere Wand weist dabei eine diese durchsetzende Bohrung 60 auf. Zur Fixierung des rohrförmigen Relinglängsholms 14 am Stützkörper 30 ist eine als Ganzes mit 62 bezeichnete Schraube vorgesehen, welche die Bohrung 60 in der unteren Wand 58 des Relinglängsholms 14 sowie die Bohrung 48 im Mittelstück 32 des Stützkörpers 30 durchsetzt und dabei mit ihrem Schraubenkopf 64 die untere Wand 58 des Relinglängsholms 14 beaufschlagt. Zum Einsetzen der Schraube 62 ist dabei eine die untere Wand 58 übergreifende obere Wand 66 ebenfalls mit einem Durchbruch 68 versehen, welcher fluchtend zu einer Schraubenachse 70 angeordnet ist. Der Durchbruch 68 ist dabei mittels einer Kappe 72 verschließbar.

Zur Fixierung des Relinglängsholms 14 relativ zum Stützkörper 30 und zum Fixieren des Stützkörpers 30 in der Relingaufnahme 20 ist die Schraube 62 mit ihrem dem Kopf 64 abgewandten Gewindeabschnitt 74 in eine Gewindebohrung 76 eines als Ganzes mit 78 bezeichneten Verankerungsteils einschraubbar. Dieses mit 78 bezeichnete Verankerungsteil ist vorzugsweise als T-Nutenstein ausgebildet, welcher ein Oberteil 80 und einen an dieses angeformten Querflansch 82 aufweist, welcher in einer T-förmigen Nut 84 der Relingaufnahme 20 liegt und dabei durch die Leisten 86 und 88 gegen ein Herausgleiten aus der T-Nut 84 nach oben in Richtung des Stützkörpers 30 gesichert ist, während das Oberteil 80 zwischen den Leisten 86 und 88 in Richtung des Stützkörpers 30 herausragt und formschlüssig in einen Längskanalabschnitt 90 des Längskanals 52 eingreift.

Ferner sitzt der Stützkörper 30 mit seiner unteren Auflagefläche 54 auf einer mit durch die Leisten 86 und 88 der Relingaufnahme 20 gebildeten Stützfläche 92 auf.

Damit fixiert die Schraube 62 einerseits den Relinglängsholm 14 am Stützkörper 30 und andererseits den Stützkörper 30 an der Relingaufnahme 20, wobei das Verankerungsteil 78 in Längsrichtung 94 der Relingaufnahme 20 verschiebbar und kraftschlüssig festlegbar ist, während quer zur Längsrichtung 94 der Relingaufnahme 20 eine formschlüssige Fixierung des Verankerungsteils 78 und somit auch des Stützkörpers 30 relativ zur Relingaufnahme 20 erfolgt.

Zusätzlich werden auf die Relinglängsholme 14 wirkende Querkräfte durch die die Bohrung 60 und die Bohrung 48 durchsetzende Schraube 62 formschlüssig auf den Stützkörper 30 übertragen und der Stützkörper 30 überträgt seinerseits die Querkräfte durch den Formschluß zwischen dem Längskanalabschnitt 90 und dem Oberteil 80 des Verankerungsteils 78 auf die Relingaufnahme 20.

Da sich die Relingaufnahme 20 vorzugsweise als im Querschnitt C-förmige Profilschiene ausgebildet ist und mit ihrer Längsrichtung 94 parallel zur Längsrichtung 96 des Relinglängsholms 14 erstreckt und vorzugsweise im wesentlichen über das gesamte Dach 22 des Kraftfahrzeugs 12 verläuft, ist das erfindungsgemäße Dachrelingsystem 10 an der jeweils gewünschten Längsposition fixierbar.

Besonders vorteilhaft ist bei einem Ausführungsbeispiel der erfindungsgemäßen Lösung, wenn der Stützkörper 30 so ausgerichtet ist, daß dessen Rippen 40 bis 46 sowie die Stützstege 34 und 36 sich parallel zu den Längsrichtungen 94 und 96 erstrecken, so daß auch der Längskanal 52 und der Längskanalabschnitt 90 parallel zu den Längsrichtungen 94 und 96 verlaufen.

Wie in Fig. 2 und 3 dargestellt, ist das Fußteil 18 mit einer Verkleidung 100 versehen, welche den Stützkörper 30 in der Art einer sich in Richtung der Schraubenachse 70 erstreckenden Hülse umschließt und sich mit ihren Seitenwänden 102, 104, 106 und 108 jeweils von dem Relinglängsholm 14 bis zur Relingaufnahme 20 erstreckt. Vorzugsweise weisen die einander gegenüberliegenden und ungefähr parallel zur Längsrichtung 94 verlaufenden Seitenwände 102 und 104 an dem Relinglängsholm 14 anliegende Seitenlippen 110 und 112 auf, die sich an eine Außenkontur des Relinglängsholms 14 in diesem Bereich anschließen. Ferner weist die Verkleidung 100 noch zusätzlich sich in Richtung des Stützkörpers 30 erstreckende Haltestege 114 und 116 auf, welche in entsprechend geformte Ausnehmungen 118 und 120, beispielsweise vorgesehen in den oberen Rippen 44 und 46, eingreifen, um die Verkleidung 104 quer zu den Längsrichtungen 94 und 96 relativ zum Stützkörper 30 zu fixieren.

Vorzugsweise sind die Haltestege 114 und 116 an die Seitenwände 102 und 104 einstückig angeformt.

Zusätzlich sind an die Seitenwände 106 und 108 ebenfalls Haltestege 122 und 124 angeformt, welche sich jeweils an Stirnseiten 126 und 128 des Stützkörpers 30 anlegen, so daß insgesamt eine formschlüssige Fixierung der Verkleidung 100 relativ zum Stützkörper 30 in allen quer zur Schraubenachse 70 verlaufenden Richtungen gegeben ist.

Bei einer Variante der Verkleidung 100 ist vorgesehen, daß diese den Stützkörper 30 topfähnlich umschließt, wobei zwischen den Seitenwänden 102 bis 106 sich ein Topfboden erstreckt, welcher dann beispielsweise zwischen der unteren Stützfläche 56 und der oberen Auflagefläche 50 liegt und von der Schraube 62 durchsetzt ist. Es ist aber auch denkbar, den Topfboden zwischen die untere Auflagefläche 54 und die Stützfläche 92 zu legen.

Bei den endseitigen Fußteilen 16 ist der Stützkörper 30 in gleicher Weise ausgebildet wie beim mittigen Fußteil 18 und die Schraube 62 fixiert in gleicher Weise wie beim Fußteil 18 den Relinglängsholm 14 relativ zum Stützkörper 30 und zur Relingaufnahme 20, so daß diesbezüglich vollinhaltlich auf die Ausführungen zum Aufbau und zur Funktion derselben im Zusammenhang mit dem mittigen Fußteil 18 Bezug genommen werden kann.

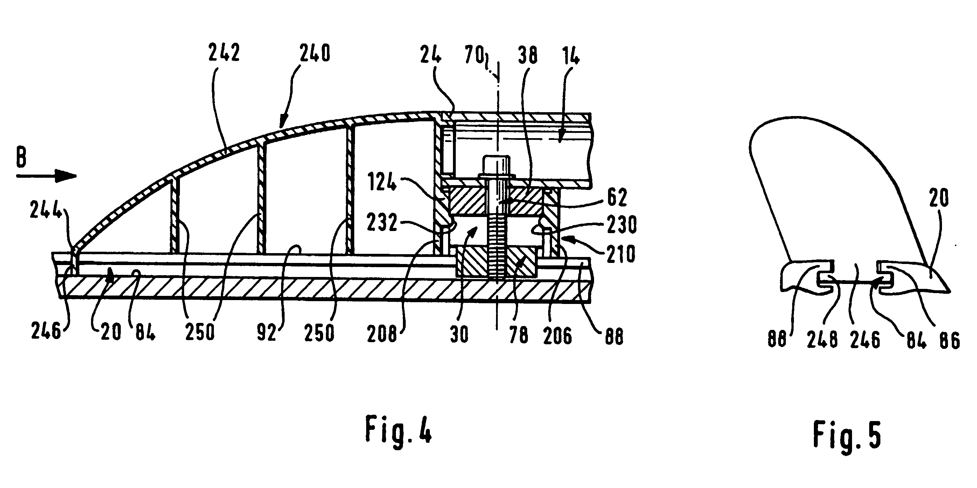

Im Gegensatz zum mittigen Fußteil 18 umschließt bei den Fußteilen 16 die Verkleidung 210 mit ihren Seitenteilen, von denen in Fig. 4 lediglich die Seitenteile 206 und 208 sichtbar sind, den Stützkörper 30, wobei die Seitenteile in gleicher Weise wie bei der Verkleidung 100 ausgebildet und an dem Stützkörper 30 fixierbar sind.

Wie in Fig. 4 dargestellt, sind dabei die Haltestege 122 und 124 nicht nur so ausgebildet, daß sie jeweils an den Stirnseiten 126 und 128 des Stützkörpers 30 anliegen, sondern noch zusätzlich mit Nocken 230 und 232 versehen, welche den Zwischensteg 38 im Bereich der Stirnseiten 126 und 128 untergreifen und somit zusammen mit den Haltestegen 114 und 116 eine Bewegung des Stützkörpers 30 relativ zur Verkleidung 210 in Richtung der Schraubenachse 70 verhindern.

Damit ist zur Montage der Stützkörper 30 relativ zur Verkleidung 210 sowohl gegen Bewegungen quer zur Achse 70 als auch in Richtung der Achse 70 fixiert.

Im Gegensatz zur Verkleidung 100 umfaßt die Verkleidung 210 noch eine angeformte Endkappe 240, welche mit einem Bund in die Enden 24 oder 26 des Relinglängsholms 14 eingreift und dadurch an diesem fixiert ist. Außerdem schließt sich die Endkappe 240 an das jeweilige Ende 24 oder 26 des Relinglängsholms bündig an und verläuft zunächst die endseitige Querschnittsform des Relinglängsholms 14 vollständig überdeckend in der Längsrichtung 96 mit zunehmender Erstreckung vom Ende 24 oder 26 weg in Richtung der Relingaufnahme 20. Hierzu weist die Endkappe 240 eine Wand 242 auf, die sowohl in Richtung vom Ende 24 oder 26 des Relinglängsholms 14 weg als auch quer zur Längsrichtung 96 gewölbt ist, wie in Fig. 5 dargestellt. Die Endkappe 240 weist dabei an einem äußeren, dem Ende 24 oder 26 des Relinglängsholms 14 abgewandten Ende 244 noch einen Haltekörper 246, welcher in die Nut 84 eingreift und dabei die Leisten 86 und 88 mit einem unteren Flanschteil 248 hintergreift.

Damit ist auch die Endkappe 42 an ihrem dem Stützkörper 30 abgewandten vorderen Ende 244 in der Relingaufnahme 20 zusätzlich gesichert.

Zur Versteifung der Endkappe 240 sind ausgehend von der gewölbten Wand 242 senkrecht zur Relingaufnahme 20 verlaufende Stege 250 vorgesehen, welche auf der Stützfläche 92 der Relingaufnahme 20 ruhen.

## Patentansprüche

1. Dachrelingsystem für Kraftfahrzeuge, umfassend einen Relinglängsholm (14), Fußteile (16, 18) mittels welcher der Relinglängsholm (14) an mindestens einer Relingaufnahme (20) eines Kraftfahrzeugs befestigbar ist, wobei mindestens eines der Fußteile (16, 18) einen Stützkörper (30) aufweist, welcher einerseits auf der entsprechenden Relingaufnahme (20) des Kraftfahrzeugs (12) aufsitzt und andererseits den Relinglängsholm (14) trägt und welcher eine den Stützkörper (30) umgebende Verkleidung (110, 120), sowie eine Schraubverbindung (62) zwischen dem Relinglängsholm (14), dem Stützkörper (30) und der Relingaufnahme (20) aufweist, wobei die Schraubverbindung eine den Relinglängsholm (14) und den Stützkörper (30) durchsetzende Schraube (62) aufweist, **dadurch gekennzeichnet, daß** die Schraube (62) den Relinglängsholm (14) mit dem Stützkörper (30) sowie den Relinglängsholm (14) und den Stützkörper (30) mit der Relingaufnahme (20) verbindet, und daß die Schraube (62) mit einem Schraubenkopf (64) im Innern des Relinglängsholms (14) liegt.

2. Dachrelingsystem nach Anspruch 1, **dadurch gekennzeichnet, daß** die Schraube (62) einen unteren Wandbereich (58) des Relinglängsholms (14) an den Stützkörper (30) anlegt.

3. Dachrelingsystem nach Anspruch 1 oder 2, **dadurch gekennzeichnet, daß** der Relinglängsholm (14) eine Öffnung (68) zum Einsetzen der den Relinglängsholm (14) und den Stützkörper (30) verbindenden Schraube (62) aufweist.

4. Dachrelingsystem nach Anspruch 3, **dadurch gekennzeichnet, daß** die Öffnung (68) im Relinglängsholm (14) mittels eines Verschlußteils (72) verschließbar ist.

5. Dachrelingsystem nach einem der voranstehenden Ansprüche, **dadurch gekennzeichnet, daß** die Schraube in ein Verankerungsteil (78) einschraubbar ist.

6. Dachrelingsystem nach Anspruch 5, **dadurch gekennzeichnet, daß** das Verankerungsteil (78) in die Relingaufnahme (20) am Kraftfahrzeug (12) einsetzbar ist.

7. Dachrelingsystem nach Anspruch 6, **dadurch gekennzeichnet, daß** das Verankerungsteil (78) als ein in die Relingaufnahme (20) einsetzbarer Nutenstein ausgebildet ist.

8. Dachrelingsystem nach einem der voranstehenden Ansprüche, **dadurch gekennzeichnet, daß** die Verkleidung (110, 210) sich zwischen dem Relinglängsholm (14) und der jeweiligen Relingaufnahme (20) erstreckt.

9. Dachrelingsystem nach Anspruch 8, **dadurch gekennzeichnet, daß** die Verkleidung (110, 210) den Stützkörper (30) hülsenähnlich oder topfähnlich umschließt.

10. Dachrelingsystem nach einem der voranstehenden Ansprüche, **dadurch gekennzeichnet, daß** die Verkleidung (110, 210) relativ zum Stützkörper (30) durch Formschluß exakt positionierbar ist..

11. Dachrelingsystem nach einem der voranstehenden Ansprüche, **dadurch gekennzeichnet, daß** die Verkleidung (110, 210) mit dem Stützkörper (30) über Rastelemente (232, 234) verbindbar ist.

12. Dachrelingsystem nach einem der voranstehenden Ansprüche, **dadurch gekennzeichnet, daß** die Verkleidung (110, 210) sich mit Anlagelippen (110, 114) an den Relinglängsholm (14) anschließt.

13. Dachrelingsystem nach einem der voranstehenden Ansprüche, **dadurch gekennzeichnet, daß** die Verkleidung (210) eines endseitigen Fußteils (16) eine Endkappe (240) aufweist.

14. Dachrelingsystem nach Anspruch 13, **dadurch gekennzeichnet, daß** die Endkappe (240) den Relinglängsholm (14) endseitig abschließt.

15. Dachrelingsystem nach Anspruch 17 oder 18, **dadurch gekennzeichnet, daß** die Endkappe (240) an das jeweilige Ende (24, 26) des Relinglängsholms (14) von dem jeweiligen Ende (24, 26) des Relinglängsholms (14) weg in Richtung des Dachs (22) des Kraftfahrzeugdachs (12) bis zur Relingaufnahme (20) verläuft.

16. Dachrelingsystem nach einem der Ansprüche 13 bis 15, **dadurch gekennzeichnet, daß** die Endkappe (240) in der jeweiligen Relingaufnahme (20) mittels eines Formschlußelements (246) verankert ist.

17. Dachrelingsystem nach einem der voranstehenden Ansprüche, **dadurch gekennzeichnet, daß** der Stützkörper (30) ein Mittelstück (32) und von diesem abstehende Rippen (40 bis 46) aufweist.

18. Dachrelingsystem nach einem der voranstehenden Ansprüche, **dadurch gekennzeichnet, daß** der Stützkörper (30) aus einem Abschnitt eines langgestreckten Profilstabes hergestellt ist.

19. Dachrelingsystem nach einem der voranstehenden Ansprüche, **dadurch gekennzeichnet, daß** der Stützkörper (30) eine den fixierten Relinglängsholm (14) gegen Bewegungen quer zu einer Längsrichtung (96) des Relinglängsholms (14) sichernde Aufnahme (48, 60, 62) aufweist.

20. Dachrelingsystem nach einem der Ansprüche 5 bis 19, **dadurch gekennzeichnet, daß** der Stützkörper (30) eine Aufnahme (90) für das Verankerungsteil (78) aufweist.

21. Dachrelingsystem nach Anspruch 20, **dadurch gekennzeichnet, daß** die Aufnahme (90) im Stützkörper (30) und das Verankerungsteil (78) mit einem aus der Relingaufnahme (20) des Kraftfahrzeugs (12) überstehenden Oberteil (80) formschlüssig zusammenwirken.

22. Dachrelingsystem nach einem der voranstehenden Ansprüche, **dadurch gekennzeichnet, daß** die Relingaufnahme (20) eine im Querschnitt C-förmige Schiene mit einer T-Nut (90) ist.

## Claims

1. Roof rail system for motor vehicles, comprising a longitudinal rail member (14), foot parts (16, 18), by means of which the longitudinal rail member (14) can be fastened to at least one rail mount (20) of a motor vehicle, wherein at least one of the foot parts (16, 18) comprises a support body (30) which is seated on the corresponding rail mount (20) of the motor vehicle (12) on one side and bears the longitudinal rail member (14) on the other and which comprises a covering (110, 120), surrounding the support body (30), as well as a screw connection (62) between the longitudinal rail member (14), the support body (30) and the rail mount (20), wherein the screw connection comprises a screw (62) which passes through the longitudinal rail member (14) and the support body (30), **characterised in that** the screw (62) connects the longitudinal rail member (14) to the support body (30) as well as the longitudinal rail member (14) and the support body (30) to the rail mount (20), and that the screw (62) lies with a screw head (64) in the interior of the longitudinal rail member (14).

2. Roof rail system according to Claim 1, **characterised in that** the screw (62) applies a lower wall region (58) of the longitudinal rail member (14) to the support body (30).

3. Roof rail system according to Claim 1 or 2, **characterised in that** the longitudinal rail member (14) comprises an opening (68) for inserting the screw (62) connecting the longitudinal rail member (14) and the support body (30).

4. Roof rail system according to Claim 3, **characterised in that** the opening (68) in the longitudinal rail member (14) can be closed by means of a closure part (72).

5. Roof rail system according to any one of the preceding Claims, **characterised in that** the screw can be screwed into an anchoring part (78).

6. Roof rail system according to Claim 5, **characterised in that** the anchoring part (78) can be inserted in the rail mount (20) on the motor vehicle (12).

7. Roof rail system according to Claim 6, **characterised in that** the anchoring part (78) is formed as a slide block which can be inserted in the rail mount (20).

8. Roof rail system according to any one of the preceding Claims, **characterised in that** the covering (110, 210) extends between the longitudinal rail member (14) and the respective rail mount (20).

9. Roof rail system according to Claim 8, **characterised in that** the covering (110, 210) encloses the support body (30) like a sleeve or like a pot.

10. Roof rail system according to any one of the preceding Claims, **characterised in that** the covering (110, 210) can be exactly positioned relative to the support body (30) through a positive fit.

11. Roof rail system according to any one of the preceding Claims, **characterised in that** the covering (110, 210) can be connected to the support body (30) by means of locking elements (232, 234).

12. Roof rail system according to any one of the preceding Claims, **characterised in that** the covering (110, 210) adjoins the longitudinal rail member (14) by way of contact lips (110, 114).

13. Roof rail system according to any one of the preceding Claims, **characterised in that** the covering (210) of a terminal foot part (16) comprises an end cap (240).

14. Roof rail system according to Claim 13, **characterised in that** the end cap (240) closes off the longitudinal rail member (14) at the ends.

15. Roof rail system according to Claim 17 or 18, **characterised in that** the end cap (240) ... the respective end (24, 26) of the longitudinal rail member (14) ... extends from the respective end (24, 26) of the longitudinal rail member (14) in the direction of the roof (22) of the motor vehicle roof (12) up to the rail mount (20).

16. Roof rail system according to any one of Claims 13 to 15, **characterised in that** the end cap (240) is anchored in the respective rail mount (20) by means of a positive-fitting element (246).

17. Roof rail system according to any one of the preceding Claims, **characterised in that** the support body (30) comprises a centre piece (32) and ribs (40 to 46) protruding therefrom.

18. Roof rail system according to any one of the preceding Claims, **characterised in that** the support body (30) is made from a portion of an elongate profiled rod.

19. Roof rail system according to any one of the preceding Claims, **characterised in that** the support body (30) comprises a mount (48, 60, 62) which secures the fixed longitudinal rail member (14) against movements transversely of a longitudinal direction (96) of the longitudinal rail member (14).

20. Roof rail system according to any one of Claims 5 to 19, **characterised in that** the support body (30) comprises a mount (90) for the anchoring part (78).

21. Roof rail system according to Claim 20, **characterised in that** the mount (90) in the support body (30) and the anchoring part (78) co-operate positively with an upper part (80) projecting out of the rail mount (20) of the motor vehicle (12).

22. Roof rail system according to any one of the preceding Claims, **characterised in that** the rail mount (20) is a bar of a C-shaped cross section with a T-slot (90).

## Revendications

1. Rails de toit pour véhicules automobiles, comportant un longeron (14), des pieds (16, 18), au moyen desquels le longeron (14) peut être fixé sur au moins un logement pour rail (20) d'un véhicule automobile, au moins l'un des pieds (16, 18) comportant un corps de support (30) qui, d'une part, est monté sur le logement pour rail (20) correspondant du véhicule automobile (12) et, d'autre part, porte le longeron (14) et qui comporte un habillage (110, 120) entourant le corps de support (30), ainsi qu'un assemblage vissé (62) entre le longeron (14), le corps d'appui (30) et le logement pour rail (20), l'assemblage vissé comportant une vis (62) traversant le longeron (14) et le corps d'appui (30), **caractérisés en ce que** la vis (62) assemble le longeron (14) avec le corps de support (30), ainsi que le longeron (14) et le corps de support (30) avec le logement pour rail (20), et **en ce que** la vis (62) est disposée avec une tête de vis (64) à l'intérieur du longeron (64).

2. Rails de toit selon la revendication 1, **caractérisés en ce que** la vis (62) pousse une zone de paroi inférieure (58) du longeron (14) contre le corps de support (30).

3. Rails de toit selon la revendication 1 ou 2, **caractérisés en ce que** le longeron (14) comporte un orifice (68) pour la mise en place de la vis (62) reliant le longeron (14) et le corps de support (30).

4. Rails de toit selon la revendication 3, **caractérisés en ce que** l'orifice (68) dans le longeron (14) peut être fermé au moyen d'un élément d'obturation (72).

5. Rails de toit selon l'une quelconque des revendications précédentes, **caractérisés en ce que** la vis peut être vissée dans un élément d'ancrage (78).

6. Rails de toit selon la revendication 5, **caractérisés en ce que** l'élément d'ancrage (78) peut être inséré dans le logement pour rail (20) sur le véhicule automobile (12).

7. Rails de toit selon la revendication 6, **caractérisés en ce que** l'élément d'ancrage (78) est conçu sous forme de coulisseau pouvant être inséré dans le logement pour rail (20).

8. Rails de toit selon l'une quelconque des revendications précédentes, **caractérisés en ce que** l'habillage (110, 210) est disposé entre le longeron (14) et le logement pour rail (20) correspondant.

9. Rails de toit selon la revendication 8, **caractérisés en ce que** l'habillage (110, 210) entoure le corps de support (30) à la manière d'une gaine ou d'un godet.

10. Rails de toit selon l'une quelconque des revendications précédentes, **caractérisés en ce que** l'habillage (110, 210) peut être positionné avec précision par rapport au corps de support (30) au moyen d'un assemblage par emboîtement.

11. Rails de toit selon l'une quelconque des revendications précédentes, **caractérisés en ce que** l'habillage (110, 210) peut être assemblé au corps de support (30) par l'intermédiaire d'éléments d'encliquetage (232, 234).

12. Rails de toit selon l'une quelconque des revendications précédentes, **caractérisés en ce que** l'habillage (110, 210) est abouté au longeron (14) par des lèvres d'appui (110, 114).

13. Rails de toit selon l'une quelconque des revendications précédentes, **caractérisés en ce que** l'habillage (210) d'un pied (16) du coté d'extrémité comporte un cache terminal (240).

14. Rails de toit selon la revendication 13, **caractérisés en ce que** le cache terminal (240) ferme une extrémité du longeron (14).

15. Rails de toit selon la revendication 17 ou 18, **caractérisés en ce que** le cache terminal (240), au niveau de l'extrémité (24, 26) concernée du longeron (14), s'étend à partir de l'extrémité (24, 26) concernée du longeron (14) en direction du toit (22) du véhicule automobile (12) jusqu'au logement pour rail (20).

16. Rails de toit selon l'une quelconque des revendications 13 à 15, **caractérisés en ce que** le cache terminal (240) est ancré dans le logement pour rail (20) correspondant au moyen d'un élément d'assemblage emboîté (246).

17. Rails de toit selon l'une quelconque des revendications précédentes, **caractérisés en ce que** le corps de support (30) comporte une partie centrale (32) et des ailettes (40 à 46) en saillie sur celle-ci.

18. Rails de toit selon l'une quelconque des revendications précédentes, **caractérisés en ce que** le corps de support (30) est réalisé à partir d'un tronçon d'une barre profilée allongée.

19. Rails de toit selon l'une quelconque des revendications précédentes, **caractérisés en ce que** le corps de support (30) comporte un logement (48, 60, 62), par lequel le longeron (14) fixé est empêché d'effectuer des mouvements dans le sens transversal à une direction longitudinale (96) du longeron (14).

20. Rails de toit selon l'une quelconque des revendications 5 à 19, **caractérisés en ce que** le corps de support (30) comporte un logement (90) pour l'élément d'ancrage (78).

21. Rails de toit selon la revendication 20, **caractérisés en ce que** le logement (90) dans le corps de support (30) et l'élément d'ancrage (78) coopèrent par emboîtement avec une partie supérieure (80) s'avançant en saillie hors du logement pour rail (20) du véhicule automobile (12).

22. Rails de toit selon l'une quelconque des revendications précédentes, **caractérisés en ce que** le logement pour rail (20) est un profilé ayant une section en forme de C et comportant une rainure en T (90).
